(19) **Europäisches Patentamt**

**European Patent Office**

**Office européen des brevets**

(11) **EP 1 142 258 B1**

(12) **EUROPEAN PATENT SPECIFICATION**

(45) Date of publication and mention
of the grant of the patent:
**15.10.2003 Bulletin 2003/42**

(21) Application number: **99906132.8**

(22) Date of filing: **15.01.1999**

(51) Int Cl.⁷: **H04L 29/06**

(86) International application number:
**PCT/EP99/00213**

(87) International publication number:
**WO 00/042754 (20.07.2000 Gazette 2000/29)**

(54) **PACKET CONCATENATION METHOD AND APPARATUS**

PAKETVERKETTUNGSVERFAHREN UND VORRICHTUNG

PROCEDE ET APPAREIL DE CONCATENATION DE PAQUETS

(84) Designated Contracting States:
**BE CH DE ES FR GB IT LI NL SE**

(43) Date of publication of application:
**10.10.2001 Bulletin 2001/41**

(73) Proprietor: **Nokia Corporation**
**02150 Espoo (FI)**

(72) Inventor: **CASAIS, Eduardo**
**FIN-02130 Espoo (FI)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(56) References cited:
**WO-A-97/49209          US-A- 5 481 540**
**US-A- 5 519 701**

EP 1 142 258 B1

**EP 1 142 258 B1**

**Description**

FIELD OF THE INVENTION

The present invention relates to a method and apparatus for concatenating data packets in a communication protocol.

BACKGROUND OF THE INVENTION

In a communication protocol, a higher and a lower communication layer may be provided according to the OSI (Open Systems Interconnection) layer model, each one implementing peer-to-peer communication facilities. Between the peers, data packets, e.g. Packet Data Units (PDUs), are transmitted, which typically contain a protocol control information, i.e. a header, a trailer, an identifier, a check-sum etc., and a payload containing user information.

In a situation where the PDUs of the higher communication layer are smaller than the PDUs of the lower communication layer, concatenation can be performed by grouping several packets of the higher communication layer into the payload portion of one packet sent by the lower communication layer. This is advantageous in that the transmission of one large packet is usually more efficient in terms of bandwidth usage and transmission overhead than the transmission of several small packets, especially if the size of the basic packet in the lowest communication layer is fixed.

The concatenation procedure is performed as follows:

The size of the packets handled by the lower communication layer is known by the higher communication layer. Thus, the higher communication layer buffers the PDUs to be sent to its peer until they fill the size of a packet in the lower communication layer. Accordingly, the transmission of the packets is delayed by the higher communication layer until they can be grouped and transmitted in one block in one packet of the lower communication layer.

To avoid indefinite transmission delays, a timer may be set in the higher communication layer. When this timer expires, the higher communication layer passes the PDUs it has collected so far to the lower communication layer, without waiting any longer until the packet of the lower communication layer is entirely filled.

At the other connection end, the peer must perform a separation of the concatenated data packets.

However, concatenation entails some overhead, because timers and additional buffers have to be provided. Moreover, the provision of the timers and additional buffers may be useless for certain connections, which exchange packets infrequently. In such cases, the timers in the higher communication layer will almost always expire before enough PDUs have been collected to fill a packet in the lower communication layer. Thus, in case one server has to handle hundreds of thousands or perhaps millions of clients, the aggregated overhead to handle concatenation might be unbearable, especially as regards timers which require event queues with real-time constrains and buffers which require memory space.

Additionally, the timers for flushing the concatenation buffers may slow down the connection and cancel the increased throughput provided by concatenation, if their time period is set too long.

A possible way to handle concatenation of PDUs would be for an application program using the top-level communication layer to explicitly instruct that layer when to start and when to stop collecting packets to be concatenated. However, such an approach makes the concatenation process dependent from the specific application using the communication protocol, and requires the application to become aware of details of the underlying communication layers.

WO 97/49209 discloses an adaptive packet transmission system comprising a mechanism that dynamically adjusts the number of packets sent in a group of packets from a node to reflect the rate of packets arriving at the node.

SUMMARY OF THE INVENTION

It is therefore an object of the present invention to provide a method and apparatus for concatenating data packets, by means of which overhead and delay can be reduced.

This object is achieved by a method for concatenating data packets in a communication protocol, comprising the steps of:

    allocating a connection to be used for concatenation to one of a plurality of memory regions of a memory means;
    storing data packets received from said connection on the basis of said allocation into said one memory region;
    providing an activity information of said connection; and
    changing the allocation of said connection on the basis of said activity information.

Additionally, the above object is achieved by an apparatus for concatenating data packets in a communication protocol, comprising:

2

memory means having a plurality of memory regions;

control means for allocating a connection to one of said plurality of memory regions, said one of said plurality of memory regions being used for concatenating data packets of said connection; and

providing means for providing an activity information of said connection, wherein said control means is arranged to change the allocation of said connections based on said activity information.

Accordingly, the number and/or position of connections in the memory means can be adapted dynamically according to the actual load situation by changing the allocation of the connections to the memory regions. Thereby, active connections actually utilizing concatenation are kept in the memory, while connections which do not need the concatenation feature are shifted to memory regions indicating a low activity and/or purged from memory. Thus, a restriction is placed on the number of connections that can take advantage of concatenation, so as to set a boundary on the overhead. Moreover, the concatenation delay can be reduced, since needless waitings for additional PDUs are reduced due to the restriction of concatenation to connections having a minimum level of activity.

Since the concatenation process is managed for all connections and all applications in one place, a better overall utilization of limited resources can be achieved. Additionally, application programs using the top-level communication layer are relieved from any concatenation duties.

Preferably, a connection is cancelled when the activity information thereof indicates an inactive connection for a predetermined time period. Thus, inactive connections are determined on the basis of the time period since the last transmission of a data packet of the connection. Thereby, the connections used in the concatenation procedure can be restricted to those connections, over which data packets are transmitted at least every predetermined time period. In this case, the activity information may comprise a timer information indicating a storing time of a data packet of the connection. The storing time may be defined by an expiry of a predetermined time period since the last transmission of the data packet.

Additionally, the activity information may comprise a counting information indicating the number of times the timer information has reached the predetermined time period. By providing the timer and counting information, a degree of inactivity of the connection can be determined on the basis of the counting information. Thereby, those connections having a large counting information can be allocated so as to be cancelled at a higher priority, when the memory means is full and a new connection is to be established.

Preferably, a maximum number of memory regions is provided for allocating connections which can be used for concatenation. Thereby, the maximum concatenation overhead can be restricted according to the maximum number of memory regions.

Each memory region may be used for storing the activity information and may comprise a buffer region for storing the received data packets. Thus, both the data packets and the activity information can be read from the same memory region, whereby processing overhead for controlling the allocation can be minimized.

Preferably, the memory region is an element of cache memory. Thereby, the allocation of the connection to the memory region can be performed such that inactive connections are placed at the end of the cache memory and active connections at the front of the cache memory. Thereby, inactive connections are automatically deleted from the cache memory, in case the cache is full and new connections are added.

In this case, the control processing may be based on a first pointer for indicating the first element of the cache memory, a second pointer for indicating the last element in the cache memory, and a third pointer for indicating an element between the first and the last element of the cache memory. These pointers can be used for allocating a connection to an element of the cache memory in accordance with the determined activity of the connection.

Therein, a connection can be allocated to an element defined by the third pointer, when the activity information indicates a low activity. Furthermore, a connection can be allocated to an element defined by the first pointer, when the activity information indicates a high activity. Additionally, a connection can be allocated to an element defined by the second pointer, when the activity information indicates an inactive connection. In this case, the element of the connection is cancelled from the cache memory, when a new element for a new connection is created and the connection is allocated to the last element of the cache memory.

The cache memory may be an array. In this case, a pointer information may be stored in the memory region, the pointer information pointing to a separate memory in which the activity information and the data packets received from the connection are stored. Thereby, inefficient copying and shifting of data in the array can be prevented, since only pointers to other memory structures are stored.

The predetermined time period may be adjusted based on a packet waiting time of the latest connection having the highest activity, based on an average of packet waiting times of all preceding connections having the highest activity, or based on a dynamic moving average of a packet waiting time of preceding connections. Thus, the timer can be dynamically adjusted to reflect the actual behavior of the connections, to thereby increase the benefits of concatenation.

BRIEF DESCRIPTION OF THE DRAWINGS

In the following, the present invention will be described in greater detail on the basis of a preferred embodiment with reference to the accompanying drawings, in which:

Fig. 1 shows a principle block diagram of a concatenation apparatus according to the preferred embodiment of the present invention,

Fig. 2 shows a principle diagram of a cache memory used in the preferred embodiment of the present invention,

Fig. 3A shows time charts of input higher layer PDUs and output lower layer PDUs in a simplified example of the preferred embodiment of the present invention,

Fig. 3B shows a cache memory relating to the example shown in Fig. 3A,

Fig. 4 shows a flow diagram of a concatenation processing performed upon a generation of a new PDU in the preferred embodiment of the present invention, and

Fig. 5 shows a flow diagram of a concatenation processing performed upon a timer expiration in the preferred embodiment of the present invention.

DESCRIPTION OF THE PREFERRED EMBODIMENT

In the following, the preferred embodiment of the concatenation method and apparatus according to the present invention will be described.

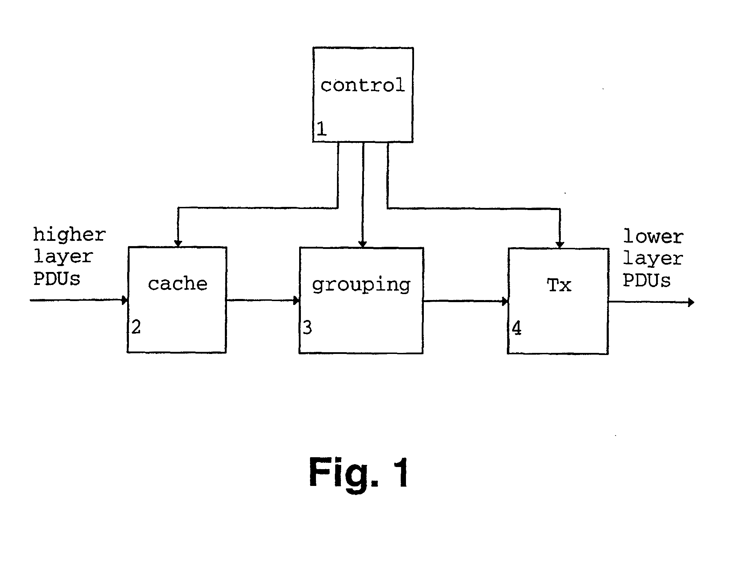

Fig. 1 shows a principle diagram of an apparatus for concatenating data packets, according to the preferred embodiment of the present invention. Such an apparatus can be comprised in any network element of a packet communication network, where data packets of different communication layers are to be concatenated.

According to Fig. 1, the concatenation apparatus comprises a memory such as a cache memory 2 for buffering PDUs received from a higher communication layer. The PDUs are stored in the cache memory 2 until they fill the size of a packet of a lower communication layer, or until a predetermined time period has expired. The stored higher layer PDUs are supplied to a grouping unit 3, where they are grouped or concatenated in order to generate PDUs of the lower communication layer. The generated lower layer PDUs are supplied to a transmitter arranged for transmitting the lower layer PDUs to a network element at another transmission end, where the lower layer PDUs are separated so as to obtain the original higher layer PDUs.

The concatenation handling and processing is controlled by a control unit 1 which may be arranged to control either one of the above cache memory 2, grouping unit 3 and transmitter 4. It is noted that the concatenation apparatus shown in Fig. 1 may be arranged as a hardware structure or as a software structure in which a central processing unit performs the concatenation handling and processing on the basis of corresponding software routines stored in a program memory.

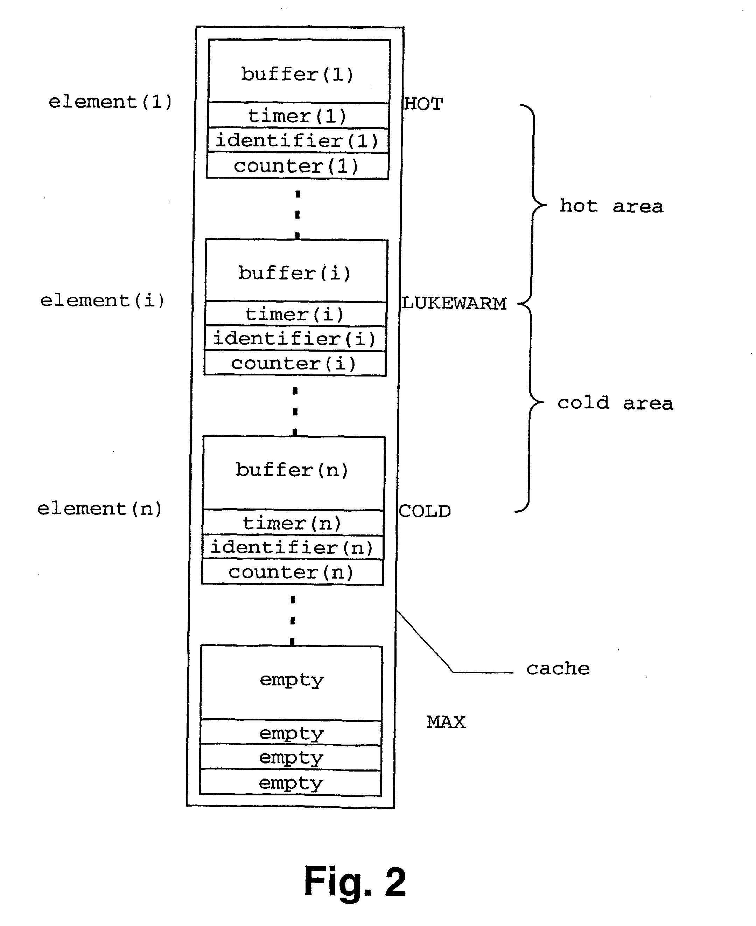

Fig. 2 shows a memory map of the cache memory 2 comprising a predetermined number of cache elements which can be used for storing higher layer PDUs in corresponding buffer areas provided in corresponding cache elements. According to Fig. 2, a maximum number MAX of connections can be used for the concatenation processing. In the case shown in Fig. 2, the cache memory is not fully used, since empty cache elements are provided in the lower portion of the cache memory. In each one of the actually used elements *element(1)* to *element(n),* a buffer *buffer(1)* to *buffer(n)* for PDUs to be concatenated, a timer value *timer(1)* to *timer(n)* indicating the expired time period or storing time since the last transmission of PDUs in the respective element, an identifier *identifier(1)* to *identifier(n)* of a connection allocated to the respective cache element, wherein the identifier may be a tuple <client address, client port number>, a session ID or the like, and a counter value *counter(1)* to *counter(n)* indicating the number of times the timer has reached a predetermined time period. Moreover, it is assumed that each cache element knows its rank in the cache.

For performing concatenation handling, the control means 1 defines a parameter MAX indicating the maximum number of connections to be used for concatenation, a pointer or index COLD which points to the last element of the cache memory, a pointer or index HOT which points to the first element of the cache memory, a pointer or index LUKEWARM which points to a cache element located between the first and the last element of the cache memory, a parameter default_timer indicating an initial predetermined time period set in the timer, a parameter max_timer indicating the maximum time period to which the timer is set, and a parameter max_expirations defining the number of times the timer is allowed to expire without transmission of a PDU of a cache element.

Initially, the control means 1 performs settings such that HOT = COLD = LUKEWARM, default_timer = max_timer = any reasonable value (e.g. 2 seconds), max_expirations = any reasonable value (e.g. 4), MAX = any reasonable value that could correspond to the number of really active connections requiring concatenation at any point in time (e.g. 2048).

Essentially, the control means 1 performs concatenation handling and processing so as to manage a cache of connections that are deemed suitable for concatenation,
wherein the above parameters are adapted dynamically so that active connections actually utilizing concatenation are kept in the cache, while other connections that do not need the concatenation feature are purged from the cache. This is achieved by placing information about connections, i.e. the received PDUs, the timer value, the identifier and the counter value, at suitable positions in the cache depending on their observed behavior, i.e. arrival of the PDUs to be concatenated, expiry of the timers and the like. Thus, the overall goal is to identify and quickly get rid of inactive and totally inactive connections, so that the cache memory contains only connections that can take advantage of concatenation.

The allocation between the connections and the cache elements is controlled by the control means 1 such that those connections which are somewhat active, i.e. new connections and connections whose timer expires but have something to send, are considered "lukewarm" and are moved towards or stay at a cache element defined by the pointer LUKEWARM. Furthermore, connections which are very active, i.e. those whose timer does not expire because there are always enough PDUs to fill a packet, are considered "hot" and are moved towards a hot area defined between the pointers HOT and LUKEWARM. Moreover, connections that are inactive, i.e. whose timer expires and which do not have anything to send, are considered "cold" and are moved quickly towards the cold area defined between the pointers LUKEWARM and COLD. Finally, connections that are totally inactive, i.e. whose timer has repeatedly expired such that the counter value has reached the parameter max_expirations without any transmission of a PDU, are eliminated from the cache memory.

Accordingly, inactive and totally inactive connections are allocated to a cold area and are thus quickly replaced by new connections, which are initially viewed as "lukewarm" and placed at a position defined by the pointer LUKEWARM.

If the number of hot connections increases or decreases, the pointer LUKEWARM is adjusted to reflect this fact. If all connections are considered "hot", the pointer LUKEWARM corresponds to the pointer COLD.

When the cache is filled up by the control means 1, the pointer LUKEWARM increases together with the pointer COLD until it has reached a central point. Thereafter, it is adapted to the actual behavior of the connections.

Usually, connections go through phases of intensive communication separated by relative long periods of inactivity. In these situations, the connections are kept in the cache memory whenever they are active, and are then eliminated when they fall asleep. Thus, connections will keep going through a cycle of entering the cache, becoming "cold", leaving it, and re-entering it again.

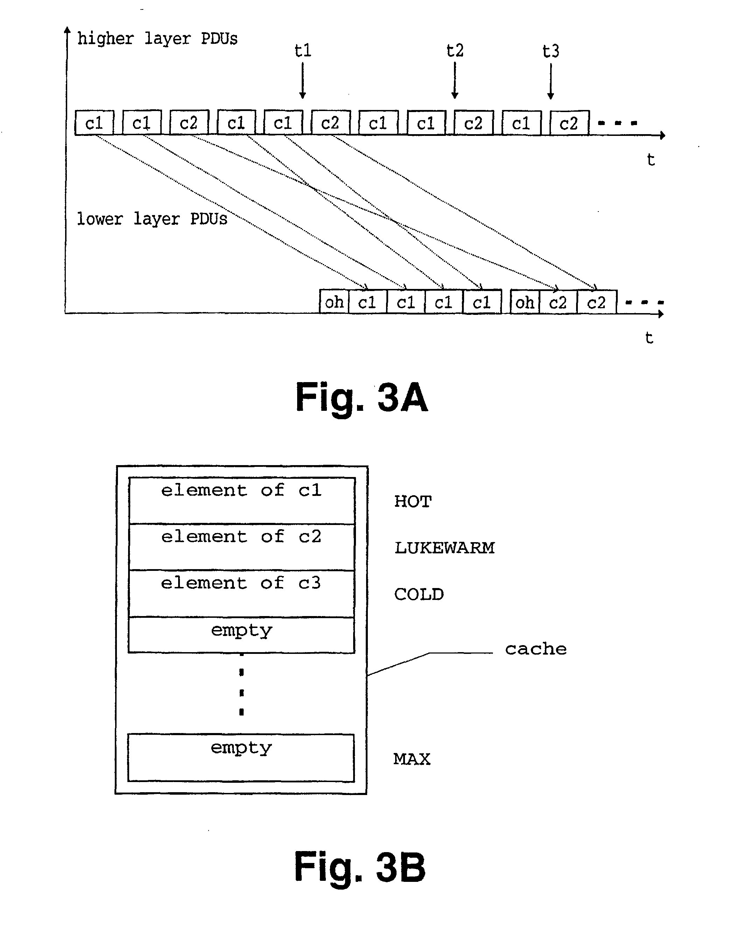

In the following, a simplified example of the preferred embodiment of the present invention is described on the basis of Figs. 3A and 3B, wherein three connections c1 to c3 are subjected to the concatenation processing performed in the concatenation apparatus shown in Fig. 1.

In Fig. 3A, a first upper time chart is shown indicating received higher layer PDUs to be stored in the cache memory 2. Furthermore, a second lower time chart indicating transmitted lower layer PDUs which are transmitted by the transmitter 4. The higher layer PDUs are successively received from individual ones of the connections c1 to c3 and stored in the cache memory 2. The lower layer PDUs are generated in the grouping unit 3, when 4 higher layer PDUs have been stored in the cache memory 2, i.e. when the buffer of the respective cache element is full, or when the timer of the respective connection has expired.

According to Fig. 3A, the lower layer PDUs comprise an overhead portion oh and a payload consisting of four or less higher layer PDUs. In the present case, the first lower layer PDU is generated at the time t1 where the buffer of the cache element allocated to the connection c1 is full, i.e. after four higher layer PDUs of c1 have been received, as the timer of the connection c1 has not yet expired.

At the time t2, the timer of the connection c2 expires after two higher layer PDUs have been received and stored in the cache memory 2. Thus, a lower layer PDU is generated comprising two higher layer PDUs in its payload portion.

At the time t3, the timer of the connection c3 expires. However, since no higher layer PDU of the connection c3 has been received so far and stored in the cache memory 2, no lower layer PDU is generated and the counter value of the corresponding cache element of the connection c3 is incremented.

Fig. 3B shows the actual state of the cache memory 2 in the above described situation. Since the buffer of the connection c1 has been full before the expiry of the timer, the connection c1 is considered "hot" and allocated by the control means 1 to the first cache element indicated by the pointer HOT. The buffer of the connection c2 was not empty at the time of the expiry of the timer of the connection c2, such that the connection c2 is considered "lukewarm" and allocated to the second position of the cache memory to which the pointer LUKEWARM points. Finally, the connection c3 is allocated to the last element of the cache memory, i.e. the position indicated by the pointer COLD, since it is judged as an inactive or "cold" connection. Thus, the position of the allocated element in the cache memory reflects the activity of the corresponding connection.

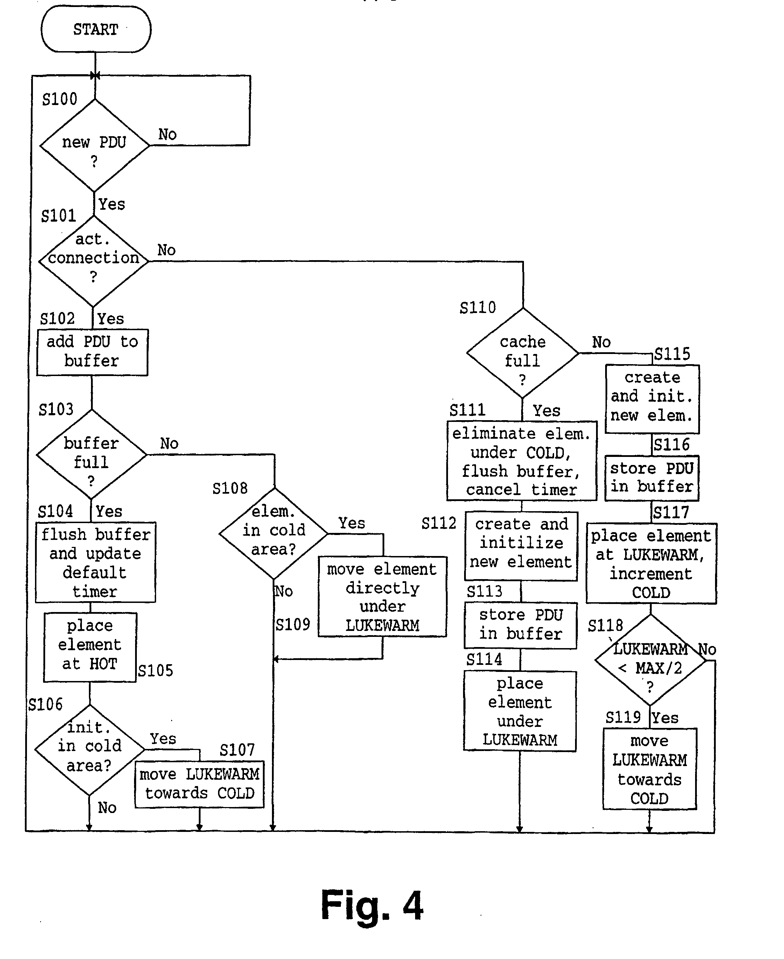

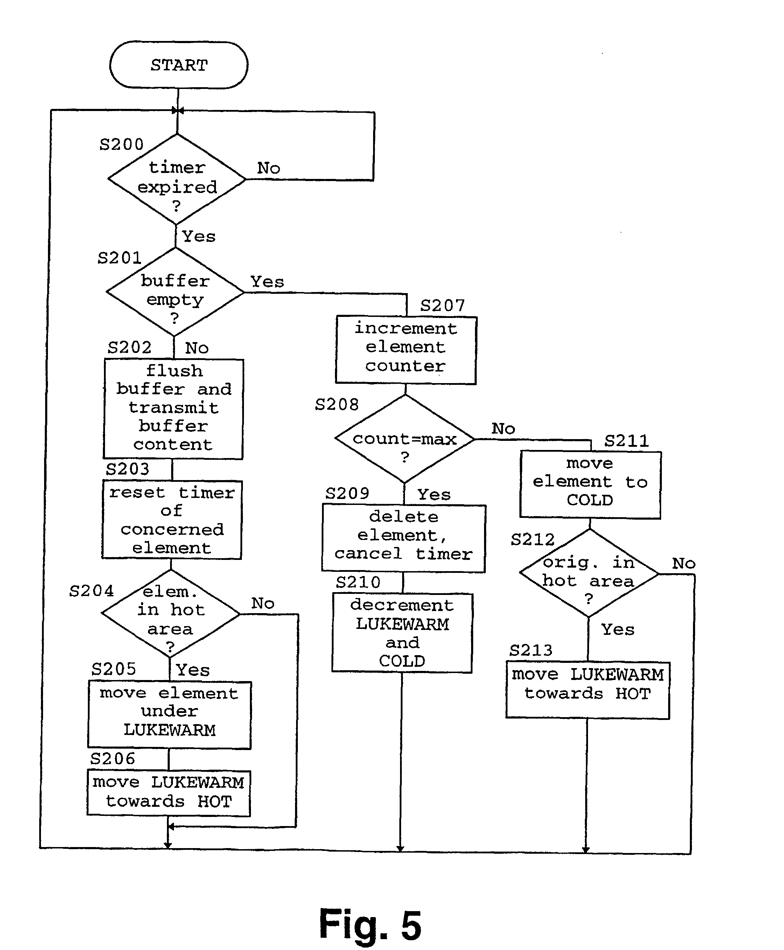

In the following, the concatenation handling and processing performed by the control unit 1 is described in greater detail on the basis of the flow diagrams shown in Figs. 4 and 5.

Essentially, two events have to be handled by the control unit 1 after the initialization of the parameters and pointers, i.e. the receipt of a higher layer PDU and the expiration of a timer.

Fig. 4 shows a flow diagram of the control procedure performed upon receipt of a new higher layer PDU. According to Fig. 4, the control means 1 initially checks in step S100 whether a new PDU has been received. If not, the control procedure remains in a waiting loop until a new PDU has been received. If a new PDU has been received, it is checked in step S101 whether the new PDU corresponds to a connection which is already active, i.e. whether a corresponding connection identifier can be found in the cache memory. If an active connection has been determined in step S101, the new PDU is added to the buffer of the respective cache element (step S102). Then, it is determined in step S103, whether the buffer has become full by adding the new PDU. If the buffer has become full, the buffer is flushed in step S104, i.e. the whole block of PDUs contained in the buffer is supplied to the grouping unit 3 and subsequently transmitted by the transmitter 4. Furthermore, the default timer is updated based on the waiting time of the buffer in the cache. Since a full buffer has been detected, the allocation of the connection is changed by placing the respective element at the front of the cache memory 2, i.e. under HOT (S105).

Thereafter, it is determined in step S106 whether the element was initially located between the pointers LUKEWARM and COLD. If so, the position of the pointer LUKEWARM is moved one position towards the pointer COLD (S107), such that the hot area grows.

If the buffer has not become full in step S103, it is determined in step S108 whether the element of the connection is located between the pointers LUKEWARM and COLD. If so, the allocation of the connection is changed such that the element is moved directly to a position corresponding to the pointer LUKEWARM (S109).

If it is determined in step S101 that the new PDU corresponds to a new connection, i.e. the connection identifier could not be found in the cache memory 2, it is determined in step S110 whether the cache memory 2 is full, i.e. whether the number of cache elements corresponds to the parameter MAX. If so, the cache element allocated under COLD is eliminated, the corresponding buffer is flushed, if necessary, and the timer is canceled (S111). Then, a new element is created, its timer is initialized to the parameter default_timer, its identifier is initialized according to the identifier of the new connection, and its counter value is set to zero (step S112). Furthermore, the received new PDU is put into the buffer of the new element (S113) and the resulting new element is placed at a position defined by the pointer LUKEWARM.

If the cache is determined to be not full in step S110, i.e. the cache contains less than its maximum number of cache elements, a new element is created and initialized as described in step S111 (S115). Furthermore, the received new PDU is stored in the buffer of the new element (S117), and the new element is placed at a position defined by the pointer LUKEWARM (S117). Subsequently, it is determined in step S118 whether the pointer LUKEWARM points to a position below the center of the cache memory 2 (LUKEWARM < MAX/2). If so, the pointer LUKEWARM is moved one position towards the pointer COLD which itself has been incremented one position in step S117 due to the insertion of the new element.

After the above described respective branches of the flow diagram have been processed, the procedure returns to step S100 in order to wait for a new PDU.

Fig. 5 shows a flow diagram of the control procedure performed in case of the second event, i.e. if one of the timers of the cache elements has expired. In step S200, it is determined whether a timer has been expired, i.e. whether its time period has reached the parameter max_timer. If not, the procedure stays in a waiting loop until the expiry of a timer has been detected.

If one of the timers has expired, it is determined in step S201 whether the buffer of the element corresponding to the expired timer is empty. If the buffer of the element is not empty, the buffer is flushed and its content is grouped and transmitted in a lower layer PDU (S202). Then, the timer of the concerned element is reset (S203). Thereafter, it is determined in step S204 whether the element was placed between LUKEWARM and HOT, i.e. in the hot area. If so, the allocation of the connection is changed so as to move the element under LUKEWARM (S205). Furthermore, the pointer LUKEWARM is moved one position towards the pointer HOT such that the hot area shrinks.

If the buffer of the concerned element is empty in step S201, the counter value of the respective element is incremented (S207), and it is then checked in step S208, whether the counter value equals the parameter max_expirations. If so, the element is deleted due to the total inactivity of the connection allocated thereto, and the timer is cancelled (S209). Furthermore, the pointers LUKEWARM and COLD are decremented by one, since the number of elements has decreased.

If the counter value is smaller then the parameter max_expirations, the concerned element is moved from its current position to COLD (S211), due to the inactive connection allocated thereto. Then, it is checked in step S212 whether the concerned element was originally placed between HOT and LUKEWARM. If so, the pointer LUKEWARM is moved one position towards the pointer HOT, such that the hot area shrinks.

After processing of the above described branches of the flow diagram, the procedure returns to step S200 in order to wait for the expiry of a timer.

It is noted, that the flow diagrams shown in Figs. 4 and 5 may be combined in an obvious manner to form a single diagram, wherein the checking operations concerning the expiry of one of the timers and the receipt of a new PDU are included in a single waiting loop.

As an alternative, the above concatenation approach can be simplified by fixing the pointer LUKEWARM to an arbitrary value, e.g. MAX/2, and not adjusting it.

The cache memory 2 may be implemented as an array, wherein the pointers LUKEWARM, COLD and HOT are indices defining respective array positions, or as a linked list, wherein the above pointers point to respective elements in the list. However, the array may be inconvenient in that moving or inserting elements requires potentially inefficient copying and shifting of data in the array. The same applies to a certain degree to the linked list. This inconvenience can be aleviated somehow by storing only pointers to other memory structures, such as externally allocated structures, since copying pointers requires less processing power than copying entire structures comprising PDU buffers, counter values, timer values and identifiers.

As to the relocation of elements, a fine tuning is possible by moving the elements by one position instead of placing them directly at specific LUKEWARM COLD or HOT positions. This alternative would slow down the movement of really active connections towards the hot area and really inactive connections towards the cold area.

As already described in step S104 of Fig. 4, the parameter default_timer can be dynamically adjusted so as to reflect the actual behavior of the connections, whereby the benefits of the concatenation can be increased. In particular, the parameter default_timer can be modified in accordance with the actual waiting period of connections, which defines the time period until their buffers are full before the expiration of their timers.

The dynamic adjustment of the parameter default_timer may be performed by assigning the waiting time of the latest hot connection as the parameter default_timer. Alternatively, an average of all past hot connections can be assigned as the parameter default_timer, which requires computing and updating the average for the entire lifetime of the cache memory 2. As a further alternative, the parameter default_timer can be assigned on the basis of a function of past connections with a dynamic moving average, for example

$$\text{default\_timer}_t = \alpha \cdot \text{wait\_time}_{t-1} + (1-\alpha) \cdot \text{default \_timer}_{t-1},$$

wherein $0 < \alpha < 1$, $\text{default\_timer}_0 = \text{max\_timer}$, and

$\text{wait\_time}_{t-1}$ denotes the waiting time of a past connection defined by the respective index t-1. However, in any case, the parameter default_timer may not exceed the parameter max_timer.

It is to be noted that the above description of the preferred embodiment and the accompanying drawings are only intended to illustrate the present invention. The preferred embodiment of the present invention may thus vary within the scope of the attached claims.

In summary, a method and apparatus for concatenating data packets in a communication protocol is described, wherein a connection to be used for concatenation is allocated to a memory region based on which data packets received from said connection are stored in order to be concatenated. Furthermore, an activity information of the connection is provided, wherein the allocation of the connection is changed on the basis of the activity information. Thus, a cache of connections which are deemed suitable for concatenation can be managed by shifting and cancelling the memory regions allocated to the connection so that active connections which actually utilize concatenation are kept in the cache, while other connections which do not need the concatenation feature are purged from the cache. Thereby, a restriction can be placed on the number of connections that can take advantage of the concatenation, so as to limit the overhead produced by the concatenation feature.

**Claims**

1. A method for concatenating data packets in a communication protocol, comprising the steps of:

a) allocating a connection to be used for concatenation to one of a plurality of memory regions of a memory means (2);

b) storing data packets received from said connection on the basis of said allocation into said one memory region;

c) providing an activity information of said connection; and

d) changing the allocation of said connection on the basis of said activity information.

2. A method according to claim 1, wherein said connection is canceled, when said activity information indicates an inactive connection for a predetermined time period.

3. A method according to claim 1 or 2, wherein said activity information comprises a timer information indicating a storing time of a data packet of said connection.

4. A method according to claim 3, wherein said activity information comprises a counting information indicating the number of times said timer information has reached a predetermined time period.

5. A method according to any one of the preceeding claims, wherein a maximum number of memory regions is provided for allocating connections which can be used for concatenation.

6. A method according to any one of the preceeding claims, wherein said memory region is used to store said activity information and comprises a buffer region for storing said received data packets.

7. A method according to any of the preceeding claims, wherein an identification information for identifying said connection is stored in said memory region.

8. A method according to claim 4, wherein a predetermined value of said counting information is used to indicate an inactive connection.

9. A method according to any one of the preceeding claims, wherein said memory region is an element of a cache memory.

10. A method according to claim 9, wherein a pointer information is stored in said memory region, said pointer information pointing to a separate memory in which said activity information and said data packets received from said connection are stored.

11. A method according to claim 9 or 10, wherein a first pointer is provided for indicating the first element of said cache memory, a second pointer for indicating the last element of said cache memory, and a third pointer for indicating an element between said first and last element of said cache memory.

12. A method according to claim 11, wherein said connection is allocated to an element defined by said third pointer, when said activity information indicates a low activity.

13. A method according to any one of claims 9 to 12, wherein said connection is allocated to an element defined by said first pointer, when said activity information indicates a high activity.

14. A method according to any one of claims 9 to 13, wherein said connection is allocated to an element defined by said second pointer, when said activity information indicates an inactive connection.

15. A method according to any one of claims 9 to 14, wherein said element of said connection is cancelled from said cache memory, when said connection has been allocated to the last element of said cache memory and a new element for a new connection is created.

16. A method according to any one of claims 9 to 15, wherein said cache memory is an array.

17. A method according to any one of claims 2 to 16, wherein said predetermined time period is adjusted based on a packet waiting time of the latest connection having the highest activity.

18. A method according to any one of claims 2 to 16, wherein said predetermined time period is adjusted based on an average of packet waiting times of all preceding connections having the highest activity.

19. A method according to any one of claims 2 to 16, wherein said predetermined time period is adjusted based on a dynamic moving average of a packet waiting time of preceding connections.

20. An apparatus for concatenating data packets in a communication protocol, comprising:

a) memory means **(2)** having a plurality of memory regions;

b) control means **(1)** for allocating a connection to one of said plurality of memory regions, said one of said plurality of memory regions being used for concatenating data packets of said connection; and

c) providing means **(1)** for providing an activity information of said connection,

d) wherein said control means **(1)** is arranged to change the allocation of said connection based on said activity information.

21. An apparatus according to claim 20, wherein a timer is provided for indicating an expiry of a predetermined storing time of a data packet of said connection, and wherein said activity information comprises a timer value of said timer.

22. An apparatus according to claim 21, wherein a counter is provided for counting the number of times said timer has reached said predetermined time period, and wherein said activity information comprises a count value of said counter.

23. An apparatus according to any one of claims 20 to 22, wherein said memory means is a cache memory **(2)** and wherein said memory region is an element of said cache memory **(2)**.

24. An apparatus according to any one of claims 20 to 23, wherein said control means **(1)** is arranged to control said memory means **(2)** so as to store said data packets of said connection and said activity information in said one of said plurality of memory regions.

25. An apparatus according to any one of claims 20 to 23, wherein said control means **(1)** is arranged to control said memory means **(2)** so as to store a pointer information in said one of said plurality of memory regions, said pointer information pointing to a memory region of another memory means, in which said data packets of said connection and said activity information are stored.

26. An apparatus according to claim 22, wherein said control means **(1)** is arranged to cancel said connection, when said counter has reached a predetermined counter value.

**Patentansprüche**

1. Verfahren zum Verketten von Datenpaketen in einem Kommunikationsprotokoll, mit den Schritten:

a) Zuweisen einer zum Verketten zu verwendenden Verbindung an einen einer Vielzahl von Speicherbereichen einer Speichereinrichtung (2);

b) Speichern von über die Verbindung empfangenen Datenpaketen auf Grundlage der Zuweisung in den einen Speicherbereich;

c) Bereitstellen einer Aktivitätsinformation der Verbindung; und

d) Verändern der Zuweisung der Verbindung auf Grundlage der Aktivitätsinformation.

2. Verfahren gemäß Anspruch 1, bei dem die Verbindung abgebrochen wird, wenn die Aktivitätsinformation für eine vorbestimmte Zeitdauer eine inaktive Verbindung anzeigt.

3. Verfahren gemäß Anspruch 1 oder 2, bei dem die Aktivitätsinformation eine Zeitgeberinformation aufweist, die eine Speicherzeit eines Datenpakets der Verbindung anzeigt.

4. Verfahren gemäß Anspruch 3, bei dem die Aktivitätsinformation eine Zählinformation aufweist, die die Anzahl anzeigt, wie oft die Zeitgeberinformation eine vorbestimmte Zeitdauer erreicht hat.

5. Verfahren gemäß einem der vorangehenden Ansprüche, bei dem eine maximale Anzahl von Speicherbereichen zur Zuweisung von Verbindungen bereitgestellt ist, die zum Verketten verwendet werden können.

6. Verfahren gemäß einem der vorangehenden Ansprüche, bei dem der Speicherbereich zum Speichern der Aktivitätsinformation verwendet wird und einen Zwischenspeicherbereich zum Speichern der empfangenen Datenpakete aufweist.

7. Verfahren gemäß einem der vorangehenden Ansprüche, bei dem eine Identifikationsinformation zum Identifizieren der Verbindung in dem Speicherbereich gespeichert wird.

**8.** Verfahren gemäß Anspruch 4, bei dem ein vorbestimmter Wert der Zählinformation zum Anzeigen einer inaktiven Verbindung verwendet wird.

**9.** Verfahren gemäß einem der vorangehenden Ansprüche, bei dem der Speicherbereich ein Element eines Cache-Speichers ist.

**10.** Verfahren gemäß Anspruch 9, bei dem eine Zeigerinformation in dem Speicherbereich gespeichert wird, wobei die Zeigerinformation auf einen gesonderten Speicher zeigt, in dem die Aktivitätsinformation und die über die Verbindung empfangenen Datenpakete gespeichert werden.

**11.** Verfahren gemäß Anspruch 9 oder 10, bei dem ein erster Zeiger zum Anzeigen des ersten Elements des Cache-Speichers und ein zweiter Zeiger zum Anzeigen des letzten Elements des Cache-Speichers und ein dritter Zeiger zum Anzeigen eines Elements des Cache-Speichers zwischen dem ersten und dem letzten Element bereitgestellt werden.

**12.** Verfahren gemäß Anspruch 11, bei dem die Verbindung einem mittels dem dritten Zeiger definierten Element zugewiesen wird, wenn die Aktivitätsinformation eine geringe Aktivität anzeigt.

**13.** Verfahren gemäß einem der Ansprüche 9 bis 12, bei dem die Verbindung einem mittels dem ersten Zeiger definierten Element zugewiesen wird, wenn die Aktivitätsinformation eine hohe Aktivität anzeigt.

**14.** Verfahren gemäß einem der Ansprüche 9 bis 13, bei dem die Verbindung einem mittels dem zweiten Zeiger definierten Element zugewiesen wird, wenn die Aktivitätsinformation eine inaktive Verbindung anzeigt.

**15.** Verfahren gemäß einem der Ansprüche 9 bis 14, bei dem das Element der Verbindung aus dem Cache-Speicher gelöscht wird, wenn die Verbindung dem letzten Element des Cache-Speichers zugewiesen wurde und ein neues Element für eine neue Verbindung erzeugt wird.

**16.** Verfahren gemäß einem der Ansprüche 9 bis 15, bei dem der Cache-Speicher ein Array ist.

**17.** Verfahren gemäß einem der Ansprüche 2 bis 16, bei dem die vorbestimmte Zeitdauer basierend auf einer Paketwartezeit der letzten die höchste Aktivität aufweisenden Verbindung angepasst wird.

**18.** Verfahren gemäß einem der Ansprüche 2 bis 16, bei dem die vorbestimmte Zeitdauer basierend auf einem Mittelwert von Paketwartezeiten aller vorangehender die höchste Aktivität aufweisender Verbindungen angepasst wird.

**19.** Verfahren gemäß einem der Ansprüche 2 bis 16, bei dem die vorbestimmte Zeitdauer basierend auf einem dynamischen gleitenden Mittlewert einer Paketwartezeit von vorangehenden Verbindungen angepasst wird.

**20.** Vorrichtung zum Verketten von Datenpaketen in einem Kommunikationsprotokoll, mit:

a) einer Speichereinrichtung (2) mit einer Vielzahl von Speicherbereichen;
b) einer Steuereinrichtung (1) zum Zuweisen einer Verbindung an einen einer Vielzahl von Speicherbereichen, wobei der eine einer Vielzahl von Speicherbereichen zum Verketten von Datenpaketen der Verbindung verwendet wird; und
c) einer Bereitstellungseinrichtung (1) zum Bereitstellen einer Aktivitätsinformation der Verbindung;
d) wobei die Steuereinrichtung (1) zum Verändern der Zuweisung der Verbindung auf Grundlage der Aktivitätsinformation eingerichtet ist.

**21.** Vorrichtung gemäß Anspruch 20, bei der ein Zeitgeber zum Anzeigen eines Ablaufs einer vorbestimmten Speicherzeit eines Datenpakets der Verbindung bereitgestellt ist, und bei der die Aktivitätsinformation einen Zeitgeberwert des Zeitgebers aufweist.

**22.** Vorrichtung gemäß Anspruch 21, bei der ein Zähler zum Zählen der Anzahl bereitgestellt ist, wie oft der Zeitgeber die vorbestimmte Zeitdauer erreicht hat, und bei der die Aktivitätsinformation einen Zählwert des Zählers aufweist.

**23.** Vorrichtung gemäß einem der Ansprüche 20 bis 22, bei der die Speichereinrichtung ein Cache-Speicher (2) ist, und bei der der Speicherbereich ein Element des Cache-Speichers (2) ist.

**24.** Vorrichtung gemäß einem der Ansprüche 20 bis 23, bei der die Steuereinrichtung (1) zum derartigen Steuern der Speichereinrichtung (2) eingerichtet ist, dass die Datenpakete der Verbindung und die Aktivitätsinformation in dem einen der Vielzahl von Speicherbereichen gespeichert werden.

**25.** Vorrichtung gemäß einem der Ansprüche 20 bis 23, bei der die Steuereinrichtung (1) zum derartigen Steuern der Speichereinrichtung (2) eingerichtet ist, dass eine Zeigerinformation in einem der Vielzahl von Speicherbereichen gespeichert wird, wobei die Zeigerinformation auf einen Speicherbereich einer anderen Speichereinrichtung zeigt, in der die Datenpakete der Verbindung und die Aktivitätsinformation gespeichert werden.

**26.** Vorrichtung gemäß Anspruch 22, bei der die Steuereinrichtung (1) zum Abbrechen der Verbindung eingerichtet ist, wenn der Zähler einen vorbestimmten Zählerwert erreicht hat.

## Revendications

**1.** Un procédé pour concaténer des paquets de données dans un protocole de communication, comprenant les étapes

a) d'attribution d'une connexion qui est utilisée pour la concaténation d'une zone de la mémoire choisie parmi une pluralité de zones de la mémoire de moyens formant une mémoire (2) ;
b) de stockage des paquets de données reçus de ladite connexion sur la base de ladite attribution dans une desdites zones de la mémoire ;
c) de fourniture d'une information d'activité de ladite connexion ; et
d) de changement de l'attribution de ladite connexion sur la base de ladite information d'activité.

**2.** Un procédé selon la revendication 1, selon lequel ladite connexion est annulée quand ladite information d'activité indique une connexion inactive pour une période de temps prédéterminée.

**3.** Un procédé selon la revendication 1 ou 2, selon lequel ladite information d'activité comprend une information de registre d'horloge indiquant un temps de stockage d'un paquet de données de ladite connexion.

**4.** Un procédé selon la revendication 3, selon lequel ladite information d'activité comprend une information de dénombrement indiquant le nombre de fois où ladite information de registre d'horloge a atteint une période de temps prédéterminée.

**5.** Un procédé selon l'une des précédentes revendications, selon lequel un nombre maximum de zones de la mémoire est fourni pour attribuer des connexions qui peuvent être utilisées pour la concaténation.

**6.** Un procédé selon l'une des précédentes revendications, selon lequel ladite zone de la mémoire est utilisée pour stocker ladite information d'activité et comprend une zone de mémoire tampon pour stocker lesdits paquets de données reçus.

**7.** Un procédé selon l'une des précédentes revendications, selon lequel une information d'identification pour identifier ladite connexion est stockée dans ladite zone de la mémoire.

**8.** Un procédé selon la revendication 4, selon lequel une valeur prédéterminée de ladite information de dénombrement est utilisée pour indiquer une connexion inactive.

**9.** Un procédé selon l'une des précédentes revendications, selon lequel ladite zone de la mémoire est un élément d'une mémoire - cache.

**10.** Un procédé selon la revendication 9, selon lequel une information de pointeur est stockée dans ladite zone mémoire, ladite information de pointeur pointant vers une mémoire séparée dans laquelle ladite information d'activité et lesdits paquets de données reçus de ladite connexion sont stockés.

**11.** Un procédé selon la revendication 9 ou 10, selon lequel un premier pointeur est fourni pour indiquer le premier élément de ladite mémoire - cache, un second pointeur pour indiquer le dernier élément de ladite mémoire - cache, et un troisième pointeur pour indiquer un élément entre lesdits premier et dernier éléments de ladite mémoire - cache.

**12.** Un procédé selon la revendication 11, selon lequel ladite connexion est attribuée à un élément défini par ledit troisième pointeur, quand ladite information d'activité indique une activité faible.

**13.** Un procédé selon l'une des revendications 9 à 12, selon lequel ladite connexion est attribuée à un élément défini par ledit premier pointeur quand ladite information d'activité indique une activité élevée.

**14.** Un procédé selon l'une des revendications 9 à 13, selon lequel ladite connexion est attribuée à un élément défini par ledit second pointeur, quand ladite information d'activité indique une connexion inactive.

**15.** Un procédé selon l'une des revendications 9 à 14, selon lequel ledit élément de ladite connexion est effacé de ladite mémoire - cache, quand ladite connexion a été attribuée au dernier élément de ladite mémoire - cache et un nouvel élément pour une nouvelle connexion est créé.

**16.** Un procédé selon l'une des revendications 9 à 15, selon lequel ladite mémoire - cache est un tableau.

**17.** Un procédé selon l'une des revendications 2 à 16, selon lequel ladite période de temps prédéterminée est ajustée sur la base d'un temps d'attente de paquet de la dernière connexion ayant la plus haute activité.

**18.** Un procédé selon l'une des revendications 2 à 16, selon lequel ladite période de temps prédéterminée est ajustée sur la base d'une moyenne des temps d'attente de paquet de toutes les connexions précédentes ayant la plus haute activité.

**19.** Un procédé selon l'une des revendications 2 à 16, selon lequel ladite période de temps prédéterminée est ajustée sur la base d'une moyenne des mouvements dynamiques d'une temps d'attente de paquet des connexions précédentes.

**20.** Un dispositif pour concaténer des paquets de données dans un protocole de communication, comprenant :

a) des moyens formant une mémoire (2) ayant une pluralité de zones de mémoire ;
b) des moyens de contrôle (1) pour attribuer une connexion à une zone de la mémoire choisie parmi la susdite pluralité de zones de la mémoire, la susdite zone de la mémoire choisie parmi la susdite pluralité des zones de la mémoire étant utilisée pour concaténer des paquets de données de ladite connexion; et
c) des moyens de fourniture (1) pour fournir une information d'activité de ladite connexion,
d) selon lequel lesdits moyens de contrôle (1) sont disposés pour changer l'attribution de ladite connexion sur la base de ladite information d'activité.

**21.** Un dispositif selon la revendication 20, selon lequel un registre d'horloge est installé pour indiquer le terme d'une période de stockage prédéterminée d'un paquet de données de ladite connexion, et où ladite information d'activité comprend une valeur du registre d'horloge dudit registre d'horloge.

**22.** Un dispositif selon la revendication 21, selon lequel un compteur est prévu pour compter le nombre de fois où ledit registre d'horloge a atteint ladite période de temps prédéterminée, et selon lequel ladite information d'activité comprend une valeur de comptage dudit compteur.

**23.** Un dispositif selon l'un des revendications 20 à 22, selon lequel lesdits moyens formant une mémoire est une mémoire - cache (2) et selon lequel ladite zone de la mémoire est un élément de ladite mémoire - cache (2).

**24.** Un dispositif selon l'une des revendications 20 à 23, selon lequel lesdits moyens de contrôle (1) sont aménagés pour contrôler lesdits moyens formant une mémoire (2) afin de stocker lesdits paquets de données de ladite connexion et ladite information d'activité dans l'une des zones de la mémoire choisie parmi la susdite pluralité de zones de la mémoire.

**25.** Un dispositif selon l'une des revendications 20 à 23, selon lequel lesdits moyens de contrôle (1) sont aménagés pour contrôler lesdits moyens formant une mémoire (2) afin de stocker une information de pointeur dans l'une des zones de la mémoire choisie parmi la susdite pluralité de zones de la mémoire, ladite information de pointeur pointant vers une zone de la mémoire d'autres moyens formant une mémoire, dans lequel lesdits paquets de données de ladite connexion et ladite information d'activité sont stockés.

**26.** Un dispositif selon la revendication 22, selon lequel lesdits moyens de contrôle (1) sont aménagés pour annuler ladite connexion, quand ledit compteur a atteint une valeur de compteur prédéterminée.

**Fig. 1**

Fig. 2

higher layer PDUs

t1    t2    t3

| c1 | c1 | c2 | c1 | c1 | c2 | c1 | c1 | c2 | c1 | c2 | • • •

t

lower layer PDUs

| oh | c1 | c1 | c1 | c1 | oh | c2 | c2 | • • •

t

# Fig. 3A

| element of c1 | HOT |
| element of c2 | LUKEWARM |
| element of c3 | COLD |
| empty | |
| ⋮ | |
| empty | MAX |

cache

# Fig. 3B

**Fig. 4**

START

S100 new PDU ? — No

Yes

S101 act. connection ? — No

Yes

S102 add PDU to buffer

S103 buffer full ? — No

Yes

S104 flush buffer and update default timer

place element at HOT S105

S106 init. in cold area? — Yes S107 move LUKEWARM towards COLD

No

S108 elem. in cold area? — Yes move element directly under LUKEWARM

No S109

S110 cache full ? — No S115 create and init. new elem.

Yes

S111 eliminate elem. under COLD, flush buffer, cancel timer

S112 create and initilize new element

S113 store PDU in buffer

S114 place element under LUKEWARM

S116 store PDU in buffer

S117 place element at LUKEWARM, increment COLD

S118 LUKEWARM < MAX/2 ? — No

Yes S119

move LUKEWARM towards COLD

START

S200
timer
expired
?
No

Yes

S201
buffer
empty
?
Yes

S207
increment
element
counter

No

S202
flush
buffer and
transmit
buffer
content

S208
count=max
?
No

S211
move
element to
COLD

S203
reset timer
of
concerned
element

S209
Yes
delete
element,
cancel timer

S212
orig. in
hot area
?
No

S204
elem.
in hot
area
?
No

S210
decrement
LUKEWARM
and
COLD

Yes

S205
Yes
move element
under
LUKEWARM

S213
move LUKEWARM
towards HOT

S206
move LUKEWARM
towards HOT

# Fig. 5